# EUROPÄISCHE PATENTSCHRIFT

(11) **EP 2 561 034 B1**
(45) Veröffentlichungstag und Bekanntmachung des Hinweises auf die Patenterteilung: **22.05.2019**
(21) Anmeldenummer: 11700857.3
(22) Anmeldetag: 27.01.2011
(51) Int. Cl.: C09K 8/467, C04B 22/00, C04B 24/26

(54) **VERWENDUNG VON CSH-SUSPENSIONEN IN DER BOHRLOCHZEMENTIERUNG**
USE OF CSH SUSPENSIONS IN CEMENTING WELLS
UTILISATION DE SUSPENSIONS DE CSH (SILICATE DE CALCIUM HYDRATÉ) DANS LE CIMENTAGE DE PUITS DE FORAGE

(30) Priorität: 21.04.2010 EP 10160574
(43) Veröffentlichungstag der Anmeldung: 27.02.2013
(73) Patentinhaber: BASF SE, 67056 Ludwigshafen am Rhein (DE)
(72) Erfinder: REICHENBACH-KLINKE, Roland, 83278 Traunstein (DE); NICOLEAU, Luc, 83352 Altenmarkt an der Alz (DE)
(74) Vertreter: Witz, Michael
(86) Internationale Anmeldenummer: PCT/EP2011/051138
(87) Internationale Veröffentlichungsnummer: WO 2011/131378

(56) Entgegenhaltungen:
- EP-A1- 1 375 819
- WO-A1-2010/026155
- WO-A2-2006/138277
- US-A- 5 709 743
- US-A1- 2002 166 479
- US-A1- 2007 102 160
- US-A1- 2008 115 938

## Beschreibung

Die vorliegende Patentanmeldung beansprucht den Zeitrang der Europäischen Patentanmeldung EP 10 160 574.9 vom 21.04.2010.

Die vorliegende Erfindung betrifft die Verwendung von CSH-Suspensionen bei der Erschließung, Ausbeutung und Komplettierung unterirdischer Erdöl- und Erdgaslagerstätten sowie bei Tiefenbohrungen.

Unterirdische Erdöl-, Erdgas- und Wasserlagerstätten stehen oft unter hohem Druck. Das Bohren in solche Formationen erfordert es, dass der Druck der zirkulierenden Bohrlochflüssigkeit hinreichend groß ist, um dem Druck der unterirdischen Formationen wirksam entgegenzuwirken und so den unkontrollierten Austritt der Formationsflüssigkeiten in das Bohrloch zu verhindern.

In der Regel werden Bohrlöcher abschnittweise mit Stahlrohren ausgefüttert. Der Ringspalt zwischen den Bohrrohren und den unterirdischen Formationen wird dann mit Zement ausgefüllt. Dies kann geschehen, indem eine Zementschlämme direkt in den Ringspalt gepresst wird oder aber durch das Bohrrohr in das Bohrloch, um dann durch den aufgewendeten Druck rückwärts in diesen Ringspalt zu fließen. Der ausgehärtete Zement verhindert einerseits, dass Formationsflüssigkeiten unkontrolliert in das Bohrloch austreten, andererseits, dass Formationsflüssigkeiten ungehindert in andere Formationen eindringen.

Die Temperaturbedingungen der Lagerstätten variieren beträchtlich. Die Temperaturen können in oberflächennahen Bereichen von Permafrostregionen wie z.B. Alaska, Kanada und Sibirien sowie bei Offshore-Bohrungen in hohen Breitengraden unterhalb des Gefrierpunktes liegen und bei geothermischen Bohrungen bis zu 400 °C betragen. Aus diesem Grunde muss das Abbindeverhalten der verwendeten Zementschlämmen immer an die herrschenden Bedingungen angepasst werden. Während bei erhöhten Temperaturen in der Regel Verzögerungsmittel erforderlich sind, müssen bei tiefen Temperaturen oft Abbindebeschleuniger eingesetzt werden. Auch die Verwendung von in Stand der Technik an sich bekannten Fließmitteln und/oder Fluid-Loss-Additiven in den eingesetzten Zementschlämmen kann zu einer Verlängerung der Abbindezeiten führen, was ebenfalls die Verwendung von Beschleunigern erforderlich macht.

Laut Erik B. Nelson, Well Cementing, Schlumberger Educational Services, Sugar Land, Texas, 1990, Kapitel 3-3 ist Calciumchlorid zweifellos der am häufigsten eingesetzte, wirksamste und kostengünstigste Abbindebeschleuniger für Portlandzemente. Das CaCl₂ wird in der Regel in Konzentrationen von 2 - 4 % bwoc (Gew.-% bezogen auf den Zementanteil) eingesetzt. Leider sind bei Konzentrationen oberhalb von 6 % bwoc die Ergebnisse unvorhersehbar, und es kann zu verfrühten Abbindereaktionen kommen. Zudem ist eine Korrosion der Rohrtour durch die Chloridionen zu befürchten.

Die der vorliegenden Erfindung zu Grunde liegende Aufgabe bestand daher darin, die mit dem Stand der Technik verbundenen Nachteile im Wesentlichen zu vermeiden.

Insbesondere bestand ein Bedarf an alternativen Beschleunigern, welche die obigen Nachteile nicht aufweisen.

Diese Aufgabe wurde mit den Merkmalen des Anspruchs 1 gelöst. Die abhängigen Ansprüche betreffen bevorzugte Ausführungsformen.

In WO 2010/026155 A1 werden Härtungsbeschleuniger-Zusammensetzungen beschrieben, die neben einem wasserlöslichen, als Fließmittel für hydraulische Bindemittel geeigneten Kammpolymer auch Calciumsilikathydrat-Teilchen geeigneter Größe umfassen (siehe z.B. die Ansprüche 40 bis 52 der WO-Schrift).

Es wurde nun überraschend gefunden, dass derartige Zusammensetzungen auch als Abbindebeschleuniger-Zusammensetzungen für anorganische Bindemittel bei der Erschließung, Ausbeutung und Komplettierung unterirdischer Erdöl- und Erdgaslagerstätten sowie bei Tiefenbohrungen verwendet werden können.

Gegenstand der vorliegenden Erfindung ist demnach die Verwendung einer Abbindebeschleuniger-Zusammensetzung für anorganische Bindemittel, welche mindestens ein als Fließmittel für hydraulische Bindemittel geeignetes wasserlösliches Kammpolymer und Calciumsilikathydrat-Teilchen umfasst, bei der Erschließung, Ausbeutung und Komplettierung unterirdischer Erdöl- und Erdgaslagerstätten sowie bei Tiefenbohrungen.

Hierbei wird die Abbindebeschleuniger-Zusammensetzung entweder als eine Suspension, vorzugsweise als eine wässrige Suspension, oder in Pulverform verwendet.

Das Kammpolymer ist ein Copolymer, welches Polyetherfunktionen sowie Säurefunktionen aufweisende Seitenketten an einer Hauptkette aufweist. Es ist beispielsweise durch radikalische Copolymerisation von Säuremonomeren und Polyethermakromonomeren erhältlich, wobei das Copolymer insgesamt mindestens 45 mol-%, bevorzugt mindestens 80 mol-% von den Säuremonomeren und/oder den Polyethermakromonomeren abgeleitete Struktureinheiten umfasst.

Das Kammpolymer umfasst vorzugsweise von (Meth)Acrylsäure, Maleinsäure, Polyalkylenglykolvinylethern, Polyalkylenglykolallylethern und/oder (Meth)Acrylsäurepolyalkylenglykolestern abgeleitete Struktureinheiten. Für eine eingehende Diskussion geeigneter Struktureinheiten wird auf die Ansprüche 47 bis 49 der WO 2010/026155 A1 verwiesen. Geeignete Kammpolymere weisen zweckmäßig mittlere Molekulargewichte (Mw) von 5 000 bis 200 000 g/mol, vorzugsweise von 10 000 to 80 000 g/mol und insbesondere von 20 000 bis 70 000 g/mol, gemessen mittels Gelpermeationschromatographie, auf.

Zusätzlich zum besagten Kammpolymer können auch Polykondensate, insbesondere der in den Ansprüchen 28 bis 33 und 50 der WO 2010/026155 A1 offenbarten Art anwesend sein.

Im verwendeten Calciumsilikathydrat beträgt das molare Verhältnis von Calcium zu Silizium vorzugsweise von 0,6 bis 2,0, insbesondere von 1,1 bis1,8. Das molare Verhältnis von Calcium zu Wasser beträgt im Calciumsilikathydrat vorzugsweise von 0,6 bis 6, besonders bevorzugt von 0,6 bis 2,0 und insbesondere von 0,8 bis 2,0.

Die verwendeten Calciumsilikathydrat-Teilchen sind zweckmäßig durch Umsetzung einer wasserlöslichen Calciumverbindung mit einer wasserlöslichen Silikatverbindung erhältlich, wobei die Umsetzung vorzugsweise in Anwesenheit einer wässrigen Lösung des als Fließmittel für hydraulische Bindemittel geeigneten wasserlöslichen Kammpolymers erfolgt. Hinsichtlich weiterer Details eines geeigneten Herstellungsverfahrens wird auf die Ansprüche 1 bis 38 der WO 2010/026155 A1 verwiesen.

Geeignete Calciumsilikathydrat-Teilchen sind zweckmäßig kleiner als 1 µm, bevorzugt kleiner als 500 nm, besonders bevorzugt kleiner als 200 nm und insbesondere kleiner als 100 nm.

Als anorganische Bindemittel, deren Abbinden erfindungsgemäß beschleunigt wird, eignen sich vorzugsweise Portlandzemente, Calciumaluminat-Zemente, Gips, Anhydrit, Hochofenschlacke, Hüttensande, Flugaschen, Silica-Staub, Metakaolin, natürliche und künstliche Puzzolane und/oder gebrannte Ölschiefer, vorzugsweise Portlandzemente.

Diese Bindemittel werden zweckmäßig in Form einer Zementschlämme eingesetzt, wobei der Wasser/Zement-Wert vorzugsweise im Bereich von 0,2 bis 1,0, insbesondere im Bereich von 0,3 bis 0,6 liegt.

Ein Anwendungsgebiet, das erfindungsgemäß besonders in Betracht gezogen wird, ist die Bohrlochzementierung von Erdöl- und Erdgasbohrungen, insbesondere in Permafrostregionen und im Offshore-Bereich.

Hierbei beschleunigt die erfindungsgemäße Verwendung das Abbinden der Zementschlämme. Gleichzeitig wird die Aushärtungsgeschwindigkeit der Zementschlämme vorteilhaft erhöht. Außerdem wird die Zeit, in welcher die statische Gelfestigkeit der erhärtenden Zementschlämme von 100 lb/100 ft² (4,88 kg/m²) auf 500 lb/100 ft² (24,4 kg/m²) ansteigt, vorteilhaft verkürzt. Dies ist insbesondere bei der Bohrlochzementierung von Vorteil, da die erhärtende Zementschlämme im mittleren Bereich der Gelfestigkeit zur Rissbildung durch aufsteigende Gasblasen neigt. Dieser Bereich wird erfindungsgemäß schnell durchlaufen.

Die erfindungsgemäße Verwendung der Abbindebeschleuniger-Zusammensetzung erfolgt vorteilhaft zusammen mit anderen bei der Bohrlochzementierung gebräuchlichen Additiven, insbesondere Fließmitteln, Wasserretentionsmitteln und/oder rheologiemodifizierenden Additiven.

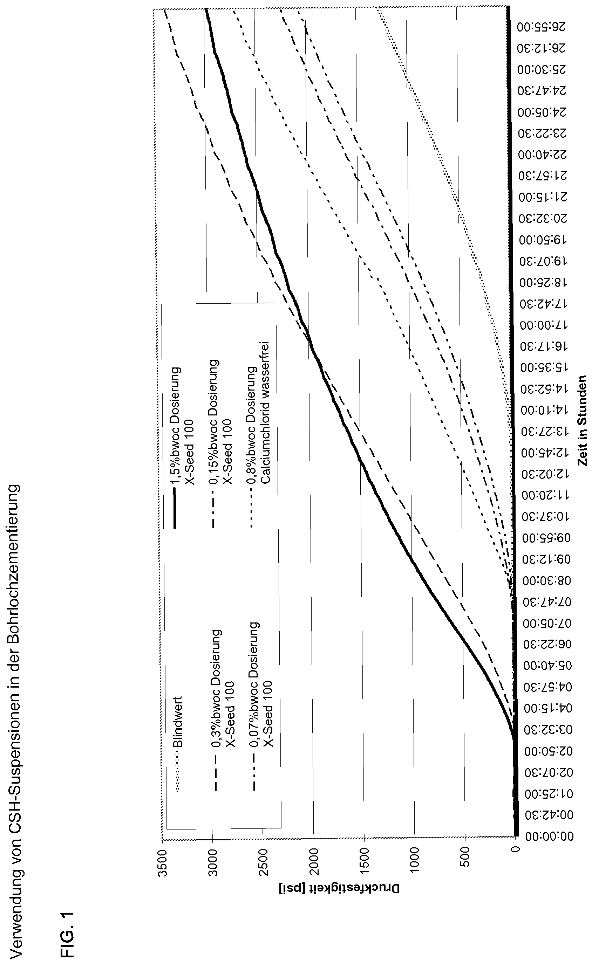

Die vorliegende Erfindung wird nun anhand des nachfolgenden Ausführungsbeispiels unter Bezug auf Fig. 1 näher erläutert. Hierbei zeigt:
- Fig. 1: den zeitlichen Anstieg der Druckfestigkeiten verschiedener Zementschlämmen (1 psi = 6894.75729 Pa).

### Anwendungsbeispiel 1

Die Zubereitung der Zementschlämmen erfolgte nach der API-Spezifikation 10, Sektion 5 und Appendix A. Hierzu wurden:

| | |
|---|---|
| 700 g | Zement (Lafarge, Klasse H) |
| 266 g | Leitungswasser |
| 3,5 g | Liquiment® K3F (Verflüssiger, Produkt der BASF Construction Polymers GmbH) |
| 3,5 g | Polytrol® FL 34 (Fluid-Loss-Additiv, Produkt der BASF Construction Polymers GmbH) |
| 1,0 g | Tributylphosphat (Entschäumer) |

homogen vermischt. Zu den Proben wurden entweder keine Zusätze ("Blindwert"), 0,80 % bwoc CaCl₂ oder unterschiedliche Mengen an X-Seed® 100 (Produkt der BASF Construction Polymers GmbH; wässrige Calciumsilikathydrat-Suspension, Teilchengröße < 100 nm, Feststoffgehalt ca. 21 Gew.-%, aktiver Calciumsilikathydrat-Anteil ca. 7 Gew.%, verwendete Kammpolymere: MVA2500 und EPPR312, ebenfalls Handelsprodukte der BASF) gegeben. Das X-Seed® 100 wurde in Mengen von 0,07 % bwoc, 0,15 % bwoc, 0,30 % bwoc und 1,50 % bwoc zugesetzt, jeweils bezogen auf den aktiven Calciumsilikathydrat-Anteil.

Die Proben wurden im "Static Gel Strength Analyzer" (Chandler Engineering) bei einer Temperatur von 23 °C und einem Druck von 1000 psi (ca. 69 bar) vermessen. Die Zeit, in der die statische Gelfestigkeit der Proben von 100 lb/100 ft² (4,88 kg/m²) auf 500 lb/ 100 ft² (24,4 kg/m²) anstieg, ist in der Tabelle 1 wiedergegeben.

**Tabelle 1**

| Probe | Zeit [min] |
|---|---|
| Blindwert | 76,5 |
| 0,80 % bwoc CaCl₂ | 44,0 |
| 0,07 % bwoc X-Seed 100 | 52,5 |
| 0,15 % bwoc X-Seed 100 | 38,0 |
| 0,30 % bwoc X-Seed 100 | 13,5 |
| 1,50 % bwoc X-Seed 100 | 15,5 |

Zusätzlich wurde der zeitliche Verlauf der Druckfestigkeit gemessen. Die Ergebnisse sind in graphischer Form in Fig. 1 wiedergegeben.

Es ist erkennbar, dass die Calciumsilikathydrat-Suspension bei geringerer Dosierung den Anstieg der Druckfestigkeit stärker beschleunigt als CaCl₂, wobei gleichzeitig die Zeit, in der die statische Gelfestigkeit der Proben den kritischen Bereich durchläuft, deutlich verkürzt wird.

## Patentansprüche

1. Verwendung einer Abbindebeschleuniger-Zusammensetzung für anorganische Bindemittel, umfassend mindestens ein wasserlösliches Kammpolymer und Calciumsilikathydrat-Teilchen, bei der Bohrlochzementierung von Erdöl- und Erdgasbohrungen, insbesondere in Permafrostregionen und im Offshore-Bereich, wobei das Kammpolymer als ein Copolymer vorliegt, welches Polyetherfunktionen sowie Säurefunktionen aufweisende Seitenketten an der Hauptkette aufweist, **dadurch gekennzeichnet, dass** die Calciumsilikathydrat-Teilchen kleiner als 5 µm sind, vorzugsweise kleiner als 1 µm, weiter bevorzugt kleiner als 500 nm, besonders bevorzugt kleiner als 200 nm und insbesondere kleiner als 100 nm.

2. Verwendung nach Anspruch 1, **dadurch gekennzeichnet, dass** die Abbindebeschleuniger-Zusammensetzung als eine Suspension, vorzugsweise als eine wässrige Suspension verwendet wird.

3. Verwendung nach Anspruch 1, **dadurch gekennzeichnet, dass** die Abbindebeschleuniger-Zusammensetzung in Pulverform verwendet wird.

4. Verwendung nach einem der Ansprüche 1 bis 3, **dadurch gekennzeichnet, dass** das Kammpolymer als ein Copolymer vorliegt, welches durch radikalische Copolymerisation von Säuremonomeren und Polyethermakromonomeren erhältlich ist, wobei das Copolymer insgesamt mindestens 45 mol-%, bevorzugt mindestens 80 mol-% der Säuremonomer- und/oder Polyethermakromonomer-Struktureinheiten umfasst.

5. Verwendung nach Anspruch 4, **dadurch gekennzeichnet, dass** das Kammpolymer (Meth)Acrylsäure-, Maleinsäure-, Polyalkylenglykolvinylether-, Polyalkylenglykolallylether- und/oder (Meth)Acrylsäurepolyalkylenglykolester-Struktureinheiten umfasst.

6. Verwendung nach einem der Ansprüche 1 bis 5, **dadurch gekennzeichnet, dass** das Kammpolymer ein mittleres Molekulargewicht (Mw) von 5 000 bis 200 000 g/mol, vorzugsweise von 10 000 to 80 000 g/mol und insbesondere von 20 000 bis 70 000 g/mol, gemessen mittels Gelpermeationschromatographie, aufweist.

7. Verwendung nach einem der Ansprüche 1 bis 6, **dadurch gekennzeichnet, dass** das molare Verhältnis von Calcium zu Silizium im Calciumsilikathydrat von 0,6 bis 2,0 beträgt, vorzugsweise von 1,1 bis1,8.

8. Verwendung nach einem der Ansprüche 1 bis 7, **dadurch gekennzeichnet, dass** das molare Verhältnis von Calcium zu Wasser im Calciumsilikathydrat von 0,6 bis 6 beträgt, vorzugsweise von 0,6 bis 2,0 und insbesondere von 0,8 bis 2,0.

9. Verwendung nach einem der Ansprüche 1 bis 8, **dadurch gekennzeichnet, dass** die Calciumsilikathydrat-Teilchen durch Umsetzung einer wasserlöslichen Calciumverbindung mit einer wasserlöslichen Silikatverbindung erhältlich sind, wobei die Umsetzung in Anwesenheit einer wässrigen Lösung des als Fließmittel für hydraulische Bindemittel geeigneten wasserlöslichen Kammpolymers erfolgt.

10. Verwendung nach einem der Ansprüche 1 bis 9, **dadurch gekennzeichnet, dass** als anorganische Bindemittel Portlandzemente, Calciumaluminat-Zemente, Gips, Anhydrit, Hochofenschlacke, Hüttensande, Flugaschen, Silica-Staub, Metakaolin, natürliche und künstliche Puzzolane und/oder gebrannte Ölschiefer, vorzugsweise Portlandzemente eingesetzt werden.

11. Verwendung nach Anspruch 10, **dadurch gekennzeichnet, dass** die Bindemittel in Form einer Zementschlämme eingesetzt werden, wobei der Wasser/Zement-Wert vorzugsweise im Bereich von 0,2 bis 1,0, insbesondere im Bereich von 0,3 bis 0,6 liegt.

12. Verwendung nach Anspruch 11 zur Beschleunigung des Abbindens der Zementschlämme.

13. Verwendung nach Anspruch 11 zur Verkürzung der Zeit, in welcher die statische Gelfestigkeit der erhärtenden Zementschlämme von 100 lb/100 ft² (4,88 kg/m²) auf 500 lb/100 ft² (24,4 kg/m²) ansteigt.

14. Verwendung nach einem der Ansprüche 1 bis 13 zusammen mit anderen bei der Bohrlochzementierung gebräuchlichen Additiven, insbesondere Fließmitteln, Wasserretentionsmitteln und/oder rheologiemodifizierenden Additiven.

## Claims

1. Use of a setting accelerator composition for inorganic binders, comprising at least one water-soluble comb polymer and calcium silicate hydrate particles, well cementing of mineral oil and natural gas wells, in particular in permafrost regions and in the offshore sector, wherein the comb polymer is present as a copolymer which has side chains comprising polyether functions as well as acid functions, which are present on the main chain, **characterized in that** the calcium silicate hydrate particles are smaller than 5 µm, preferably smaller than 1 µm, more preferably smaller than 500 nm, particularly preferably smaller than 200 nm and in particular smaller than 100 nm.

2. Use according to Claim 1, **characterized in that** the setting accelerator composition is used as a suspension, preferably as an aqueous suspension.

3. Use according to Claim 1, **characterized in that** the setting accelerator composition is used in powder form.

4. Use according to any of Claims 1 to 3, **characterized in that** the comb polymer is present as a copolymer which is obtainable by free radical copolymerization of acid monomers and polyether macromonomers, the copolymer as a whole comprising at least 45 mol%, preferably at least 80 mol%, of structural units of the acid monomers and/or the polyether macromonomers.

5. Use according to Claim 4, **characterized in that** the comb polymer comprises structural units of (meth)acrylic acid, maleic acid, polyalkylene glycol vinyl ethers, polyalkylene glycol allyl ethers and/or polyalkylene glycol (meth)acrylates.

6. Use according to any of Claims 1 to 5, **characterized in that** the comb polymer has an average molecular weight (Mw) of from 5000 to 200 000 g/mol, preferably from 10 000 to 80 000 g/mol and in particular from 20 000 to 70 000 g/mol, measured by means of gel permeation chromatography.

7. Use according to any of Claims 1 to 6, **characterized in that** the molar ratio of calcium to silicon in the calcium silicate hydrate is from 0.6 to 2.0, preferably from 1.1 to 1.8.

8. Use according to any of Claims 1 to 7, **characterized in that** the molar ratio of calcium to water in the calcium silicate hydrate is from 0.6 to 6, preferably from 0.6 to 2.0 and in particular from 0.8 to 2.0.

9. Use according to any of Claims 1 to 8, **characterized in that** the calcium silicate hydrate particles are obtainable by reacting a water-soluble calcium compound with a water-soluble silicate compound, the reaction being effected in the presence of an aqueous solution of the water-soluble comb polymer suitable as a superplasticizer for hydraulic binders.

10. Use according to any of Claims 1 to 9, **characterized in that** Portland cements, calcium aluminate cements, gypsum, anhydrite, blast furnace slag, slag sands, fly ashes, silica dust, metakaolin, natural and synthetic pozzolanas and/or calcined oil shale, preferably Portland cements, are used as inorganic binders.

11. Use according to Claim 10, **characterized in that** the binders are used in the form of a cement slurry, the water/cement value preferably being in the range from 0.2 to 1.0, in particular in the range from 0.3 to 0.6.

12. Use according to Claim 11 for accelerating the setting of the cement slurry.

13. Use according to Claim 11 for shortening the time in which the static gel strength of the hardening cement slurry increases from 100 lb/100 ft² (4.88 kg/m²) to 500 lb/100 ft² (24,4 kg/m²).

14. Use according to any of Claims 1 to 13 together with other additives customary in well cementing, in particular superplasticizers, water retention agents and/or rheology-modifying additives.

## Revendications

1. Utilisation d'une composition d'accélérateur de prise pour liants inorganiques, comprenant au moins un polymère en peigne soluble dans l'eau et des particules de silicate de calcium hydraté, lors de la cimentation de puits de forage de pétrole et de gaz naturel, en particulier dans les régions de permafrost et dans le domaine offshore, le polymère en peigne se trouvant sous forme de copolymère, qui présente des chaînes latérales présentant des fonctions polyéther ainsi que des fonctions acides sur la chaîne principale, **caractérisée en ce que** les particules de silicate de calcium hydraté sont inférieures à 5 µm, de préférence inférieures à 1 µm, plus préférablement inférieures à 500 nm, de manière particulièrement préférée inférieures à 200 nm et en particulier inférieures à 100 nm.

2. Utilisation selon la revendication 1, **caractérisée en ce que** la composition d'accélérateur de prise est utilisée sous forme d'une suspension, de préférence sous forme d'une suspension aqueuse.

3. Utilisation selon la revendication 1, **caractérisée en ce que** la composition d'accélérateur de prise est utilisée sous forme pulvérulente.

4. Utilisation selon l'une quelconque des revendications 1 à 3, **caractérisée en ce que** le polymère en peigne se trouve sous forme d'un copolymère, qui peut être obtenu par copolymérisation radicalaire de monomères acides et de macromonomères de type polyéther, le copolymère comprenant au total au moins 45% en mole, de préférence au moins 80% en mole, de motifs structuraux monomères acides et/ou macromonomères de type polyéther.

5. Utilisation selon la revendication 4, **caractérisée en ce que** le polymère en peigne comprend des motifs structuraux de type acide (méth)acrylique, acide maléique, polyalkylèneglycolvinyléther, polyalkylèneglycolallyléther et/ou ester de polyalkylèneglycol de l'acide (méth)acrylique.

6. Utilisation selon l'une quelconque des revendications 1 à 5, **caractérisée en ce que** le polymère en peigne présente un poids moléculaire moyen (Mw) de 5000 à 200.000 g/mole, de préférence de 10.000 à 80.000 g/mole et en particulier de 20.000 à 70.000 g/mole, mesuré par chromatographie par perméation de gel.

7. Utilisation selon l'une quelconque des revendications 1 à 6, **caractérisée en ce que** le rapport molaire de calcium à silicium dans le silicate de calcium hydraté est de 0,6 à 2,0, de préférence de 1,1 à 1,8.

8. Utilisation selon l'une quelconque des revendications 1 à 7, **caractérisée en ce que** le rapport molaire de calcium à eau dans le silicate de calcium hydraté est de 0,6 à 6, de préférence de 0,6 à 2,0 et en particulier de 0,8 à 2,0.

9. Utilisation selon l'une quelconque des revendications 1 à 8, **caractérisée en ce que** les particules de silicate de calcium hydraté peuvent être obtenues par transformation d'un composé soluble dans l'eau du calcium avec un composé soluble dans l'eau de type silicate, la transformation ayant lieu en présence d'une solution aqueuse du polymère en peigne soluble dans l'eau approprié comme fluidifiant pour des liants hydrauliques.

10. Utilisation selon l'une quelconque des revendications 1 à 9, **caractérisée en ce qu'**on utilise, comme liants inorganiques, des ciments Portland, des ciments d'aluminate de calcium, du plâtre, de l'anhydrite, des scories de haut-fourneau, du laitier, des cendres volantes, de la poussière de silice, du métakaolin, des pouzzolanes naturelles et synthétiques, des schistes bitumeux calcinés, de préférence des ciments Portland.

11. Utilisation selon la revendication 10, **caractérisée en ce que** les liants sont utilisés sous forme d'un laitier de ciment, le rapport eau/ciment se situant de préférence dans la plage de 0,2 à 1,0, en particulier dans la plage de 0,3 à 0,6.

12. Utilisation selon la revendication 11 pour accélérer la prise de laitier de ciment.

13. Utilisation selon la revendication 11 pour raccourcir le temps pendant lequel la solidité statique du gel du laitier de ciment qui durcit augmente de 4,88 kg/m² (100 livres/100 pieds²) à 24,4 kg/m² (500 livres/100 pieds²).

14. Utilisation selon l'une quelconque revendication 1 à 13, conjointement avec d'autres additifs usuels lors de la cimentation de puits de forage, en particulier des fluidifiants, des agents de rétention d'eau et/ou des additifs de modification de la rhéologie.
